# EUROPEAN PATENT APPLICATION

(11) **EP 4 488 824 A1**
(43) Date of publication of application: **08.01.2025**
(21) Application number: 23183977.0
(22) Date of filing: 06.07.2023
(51) Int. Cl.: G06F 8/38, G06F 9/451, G06F 9/455, G06F 9/54

(54) **A HUMAN-MACHINE INTERFACE**

(71) Applicant: ABB SCHWEIZ AG, 5400 Baden (CH)
(72) Inventor: MACAUDA, Andrea, 16165 Genova (IT); BICIK, Josef, 155 00 Praha (CZ)
(74) Representative: Kransell & Wennborg KB

(57) **Abstract**

The present invention generally relates to a distributed human-machine interface system (100) for a distributed control system or integrated operations management, comprising: a set of view modules (102) being separately isolated micro-frontend applications (104) each implemented by a web component (106), each micro-frontend application comprising a backend application (108) contained in a respective separate container (110), the backend applications communicate with their view modules using a web-based protocol, a common HMI framework (112) for all of the view modules, the common HMI framework includes at least infrastructure functionalities and user experience design.

## Description

### Field of the Invention

The present invention generally relates to a human-machine interface, to a set of control units to implement the human-machine interface, to a system, and to a computer program product.

### Background

Current generation of industrial HMIs are aging since developed upon concepts and use cases that have changed significantly, they are based on a specific deployment, for a specific set of users. Today's customers seek more agility in all of the software systems they work with, and the same should be valid for industrial HMIs. This document describes how we envisioned an architecture that will bring a traditional functionality such as industrial HMI to a different level.

Current human-machine interfaces, HMIs, were designed decades ago under different assumptions and different conditions compared to more modern systems. Typically, the current HMIs were designed for specific operating systems, OSs, or for general purpose OS like Windows. Spreading of standard protocols such as OPC Classic has improved the efficiency in for distributed control systems, DCS, and in particular HMI designs but has also increased the OS dependencies.

Furthermore, traditional HMI designs are typically monolithic due to the fact they were rarely re-designed from their original configuration, often due to the costs related to the refactoring. Moreover, the lifecycle of a monolithic system deployed on a specific operating system is complex to manage and often a challenge to evolve.

### Summary

In view of the above-mentioned and other drawbacks of the prior art, it is an object of the present invention to provide a human-machine interface that at least partly alleviates drawbacks of prior art.

According to a first aspect of the invention, there is provided a distributed human-machine interface system comprising: a set of view modules being separately isolated micro-frontend applications each implemented by a web component, each micro-frontend application comprising a backend application contained in a respective separate container, the backend applications communicate with their view modules using a web-based protocol, a common HMI framework for all of the view modules, the common HMI framework includes at least infrastructure functionalities and user experience design.

The present invention is at least partly based on the realization to deploy the HMI as micro-frontend applications with independent backend applications in separate containers. This allows for execution of the micro-frontend applications in isolation from each other to thereby simplify software lifecycle and perform e.g., updates and other management services to the isolated micro-frontends.

The distributed human machine interface system may be applied or integrated for a distributed control system or integrated operations management applications.

Containers may be managed by an external service or an orchestrator (e.g., Kubernetes, Docker Swarm, etc.) which will improve availability of the individual core service of the micro-frontend applications and allow better load balancing

A container is a standalone, executable package of software that includes everything needed to run an application: code, runtime, system tools, system libraries and settings.

Example containers include e.g., Docker, Podman, and ContainerD.

The web-based protocol packages the micro-frontend applications as web applications which advantageously allows web-based workplace for operators.

The web-based protocol may be e.g. HTTPS or WSS.

The infrastructure functionalities include e.g. authentication, logging, messaging, licensing, and layout management to mention a few examples.

In embodiments, the web component may be HTML5.

The isolation given by the micro frontends in the containers advantageously allow software engineers to choose the web framework they prefer to improve the development efficiency. Also, life cycle of individual modules is independent and allows easier system maintenance and evolution. Further, the backends of the micro-front ends are hosted in containers to enforce service isolation, modularity, and ease of deployment.

In embodiments, the common HMI framework may be configured to provide orchestrated control of all the view modules at a workplace ,i.e., the frontend. The use of a common HMI framework advantageously supports the generation of a unique platform to exchange messages and states across different micro-frontends and simplifies the integration of other applications. More explicitly, in one embodiment, the common HMI framework may be configured to exchange messages and states across different micro-frontends. Furthermore, the HMI framework may be configured to provide a token-based authentication for user login to prevent tampering of the distributed system.

In embodiments, the backend applications may communicate with their view modules using HTTPS REST API or Web Sockets.

In embodiments, the distributed human-machine interface system may comprise at least one control unit configured to run at least one micro-frontend each. Thus, the distributed human-machine interface system may be geographically distributed across more than one control unit of an industrial system.

In embodiments, the micro-frontend applications may include at least a process graphics module, and a workplace module, wherein the process graphics module may be configured to provide data indicative of features of an object a user interacts with, the workplace module is configured to find micro-frontend applications related to the object. Furthermore, the workplace module is configured to provide an overall navigation, e.g., a context menu, and arranging views into layouts such as single view, two views next to each other, tabbed view etc.

Accordingly, the distributed human-machine interface system advantageously allows for a vast range of application, especially configured for an industrial system.

The distributed human-machine interface system may further include an emissions report module as an extended application that is configured to change its content related to the object based on variations made to the object in the process graphics module.

The micro-frontend applications may advantageously further include at least one of an alarm list module, a trend view module, and an object browser module.

In preferred embodiments, the micro-frontend applications may provide at least two types of applications. That is, the distributed human-machine interface system advantageously provides for orchestrating more than one independent application in a distributed control system.

In embodiments, the distributed human-machine interface system may comprise a viewer application configured to collect visual content from the micro-frontend applications, and from at least one external application, and provide the visual contents to a computer display. In other words, the viewer application provides for integrating external applications with the micro-frontend applications or enabling e.g., real time operations data available for visualization, analysis and action. One example platform that can host the extended applications is ABB Ability Edgenius.

In embodiments, the containers may be geographically distributed on separate control units of a distributed control system.

In embodiments, the micro-frontend applications may include at least one of process graphics modules, alarm modules and trend view modules.

According to a second aspect of the invention, there is provided set of control units configured to implement the human-machine interface system according to any one of the herein disclosed methods.

Further effects and features of the second aspect of the invention are largely analogous to those described above in connection with the first aspect of the invention.

According to a third aspect of the invention, there is provided a system comprising a computer display and the set of control units according to the second aspect.

Further effects and features of the third aspect of the invention are largely analogous to those described above in connection with the first aspect and the second aspect of the invention.

According to a fourth aspect of the invention, there is provided a computer program product comprising a computer readable medium having stored thereon computer program means to implement the human-machine interface system according to any one of the herein disclosed embodiments.

The computer readable medium may be a non-transitory computer-readable storage medium.

Further effects and features of the fourth aspect of the invention are largely analogous to those described above in connection with the first aspect, the second aspect, and the third aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 illustrates a distributed human-machine interface system according to embodiments of the present invention;
Fig. 2 illustrates a distributed human-machine interface system according to embodiments of the present invention;
Fig. 3 illustrates an industrial system with two clients and a distributed human-machine interface system according to an embodiment of the invention;
Fig. 4 schematically illustrates deploying current technology with new technology including the distributed human-machine interface system according to an embodiment of the invention;
Fig. 5 provides a concrete example of a high-level architecture illustrated in fig. 4.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

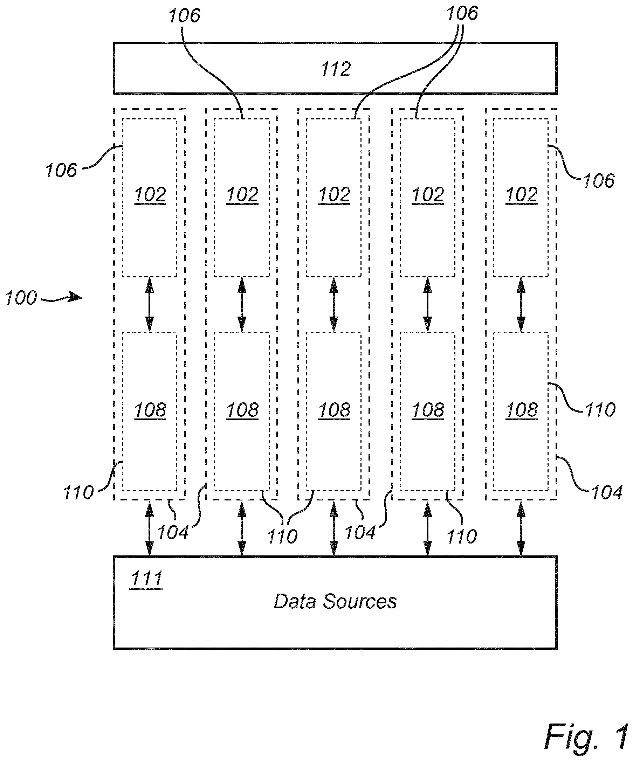

Fig. 1 illustrates a distributed human-machine interface system 100 according to embodiments of the present invention. The distributed human-machine interface system 100 comprises a set of view modules 102 being separately isolated micro-frontend applications 104 each implemented as a web component 106. In preferred embodiments, the web component is HTML5, thus the view module is an HTML5-hosted web component.

Each micro-frontend application 104 comprises a backend application 108 contained in a respective separate Docker container 110 along with its view module 102. The backend applications communicate with their view modules using a web-based protocol, such as HTTPS REST API or Web Sockets.

The back-end applications are the program codes, e.g., developed in C# .NET 6, that allow operation of the micro-frontend and can typically not be accessed by a user. The back-end applications support the operation of the front-end. The view modules are the part of the HMI that the user interacts with via e.g., the HTML5 hosted web component.

The distributed human-machine interface system 100 further comprises a common HMI framework 112 for all of the view modules 102, the common HMI framework includes at least infrastructure functionalities and user experience functionality such as layout, navigation, a common header with user information, etc. Thus, the HMI framework 112 provides the user experience across several view modules.

The common HMI framework 112 is a platform that is configured to provide orchestrated control of all the view modules 102 at a workplace. For example, common HMI framework 112 may be a JavaScript, TypeScript, or a Web Assembly that provides the common functionalities across the different micro-frontends 104. Such common functionalities include for example to exchange messages and states across different micro-frontends, or to provide a token-based authentication for user login. Other typical common functionalities may be user session management, localization, storage of user's preferences, navigation, context sensitive online help, seamless upgrade experience, logging, licensing, etc.

The backend applications 108 communicate with data sources 111, e.g., devices, controllers, input/output devices on the device side, via standard OPC UA protocols which is a known machine-to-machine communication protocol used for industrial automation. Other envisaged communication protocols include accessing data from a database or using MQTT or interacting with another service using HTTPS REST API.

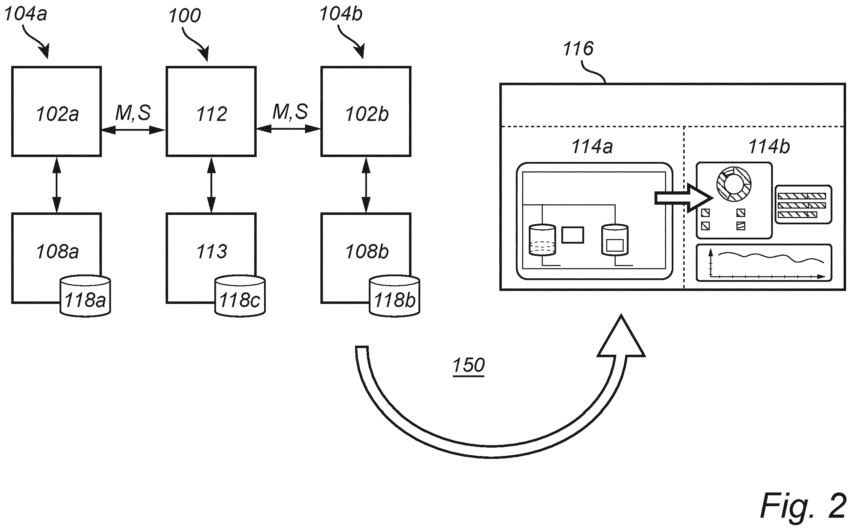

Fig. 2 illustrates an example of the common HMI framework 112 seamlessly integrating different types of applications in the same HMI workplace even if running on different application servers 118a-c.

More specifically, fig. 2 illustrates two view modules 102a and 102b, each with a separate back-end application 108a and 108b. The common HMI framework 112 is also implemented as a web component with a back-end application 113. The micro-frontend applications 104a and 104b provide at least two types of applications. In this example, the view module 102a may be a process graphics having a front-end user interface 114a. The view module 102b may be an emissions report having a front-end user interface 114b, shown on computer display 116. Other example micro front-end modules include alarms modules and trend visualization modules.

Each of the view modules 102a-b, and common HMI framework 112 with their respective back-end applications may be hosted on different servers or control units 118a, 118b, and 118c, that may be geographically distributed. Thus, the distributed human-machine interface system 100 may comprise at least one control unit 118a-c configured to run at least one micro-frontend 102a, 102b, and 112 each. This further implies that the docker containers for the back-end applications 108a, 113, and 108b may be geographically distributed on the separate control units 118a-c of a distributed control system or an integrated operation management system.

The common HMI framework 112 with its back-end application 113 provides for the process graphics module 102a and the emission report module 102b to exchange messages, M, and states, S, and the common HMI framework 112 implemented as common workplace module 112. The common workplace module 112 is configured to visualize information from the process graphics module 102a and the emission report module 102b on the display 116.

The process graphics application 102a does not necessarily have to know about the emission reports module 102b, but such an application can be "discovered", in fact, it is expected that the system shares a common information model and the industrial site and that at engineering time, microservices 102a-b are deployed with information that will put in relation objects and different aspect data. For example, if a physical valve is represented in the HMI system 100 with an object instance and visualized through process graphics 114a as a symbol, users may interact with the graphic symbol to call up its related information in the emission report applications 114b without any hard coded information, but just navigating to it via the workplace unit including the display 116.

In a typical implementation, the process graphics module 102a provides the workplace module 112 with data indicative of features of an object a user interacts in the process graphics 114a. The workplace module is configured to find micro-frontend applications related to the object. In other words, the workplace module 112 is looking for the registered applications of the distributed control system or integrated operation management system that have a relationship with the given objects, e.g., using an object directory service and return to the caller, the process graphics module 102a, the list of applications and parameters to call the object or objects.

The process graphics module 102a has the information to show a context menu with navigation information on the screen 116. The emission report application module 102b can be called. Alternatively, the context menu handling can be provided as a functionality of the workplace or a dedicated service.

The emission report application 114b can be loaded in the display 116, or if already loaded, the emission report application 114b can change its content based on the object passed by process graphics module 102b. In other words, the emissions report module 102b is configured to change its content related to the object based on variations made to the object in the process graphics module 102a.

Despite the two software modules 102a-b do not have a mutual understanding of each other, have different life cycles, and also different technology, they can interact with each other in the same user workplace with the same user account and with similar look and feel.

The set of control units 118a-c configured to implement the distributed human-machine interface system 100 may be part of a system 150 also comprising the computer display 116.

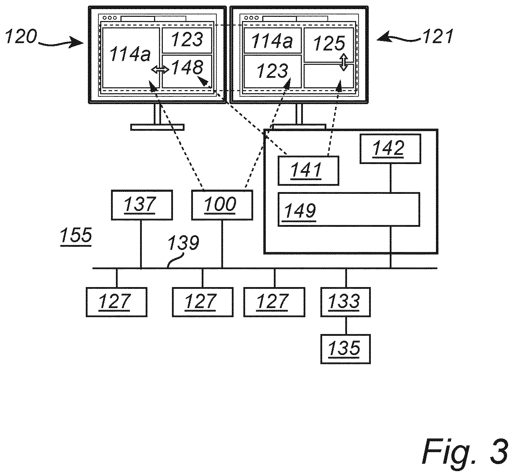

Fig. 3 illustrates two HTML5 clients, each displaying visual content from a set of modules. For example, a process graphics application 114a and an alarm list application 123 are running on both clients 120, 121. A further application 125 is running on client 125 which may be a trend visualization application. Each application is its own micro -frontend application as described herein orchestrated by an HMI framework.

On the device side of the industrial system 155, there may be system services 127, controllers 129, input/output devices 131, management systems, Field Connectivity Interface (FCI) 133 and brownfield system parts 135, i.e., old software that must coexist with new software and modules.

The engineers use engineering tools 137 to configure all software and hardware components of the system 155 over communication interface 139 (e.g., ethernet network). The communication protocol of the communication system 139 may be OPC UA, MQTT, a Web API or hardwired or wireless.

The distributed human-machine interface system 100 receives data signals from the communication system 139, and routes it to the relevant micro-frontend modules to alter the visual contents of the relevant applications 114a, 123, 125.

Furthermore, in order to integrate external applications, either local applications 141 or cloud-based applications 142, the distributed human-machine interface system 100 may comprise a viewer application 148 connected to the communication system 139. The application may be an Iframe in a web page that allows to embed third party website into a web application. For example, the application 148 is configured to collect visual content from the micro-frontend applications, and from at least one external application 141, 142, and provide the visual contents to a computer display, such as at the clients 120 and 121. The application 149 may host the web components that get loaded into the viewer 148. The application 149 may be the ABB Edgenius. Furthermore, it is possible to embed more tightly other applications, e.g., ABB applications, that use the Common HMI framework as a base. In that case those applications would not be running in a complete isolation.

The system services 127 are used for system diagnostics, authentication, licensing, security features such as audit logging, certificate management, global discovery service, etc. and retrieve information via an OPC UA Client interface as well as exposes certain information using an OPC UA Server. Diagnostic information is made available via OPC UA Server interface as well as using an interface (e.g., HTTP) that can be easily consumed by a standard orchestrator and potentially used to restart a service if it behaves abnormally. Diagnostic information can be made available to human operators on a high level but also in more detailed views to system engineers and support personnel. The diagnostic information also includes performance measurements that can be used for troubleshooting purposes or potentially to automatically increase or decrease the number of instances of a respective service to better respond to different usage patterns.

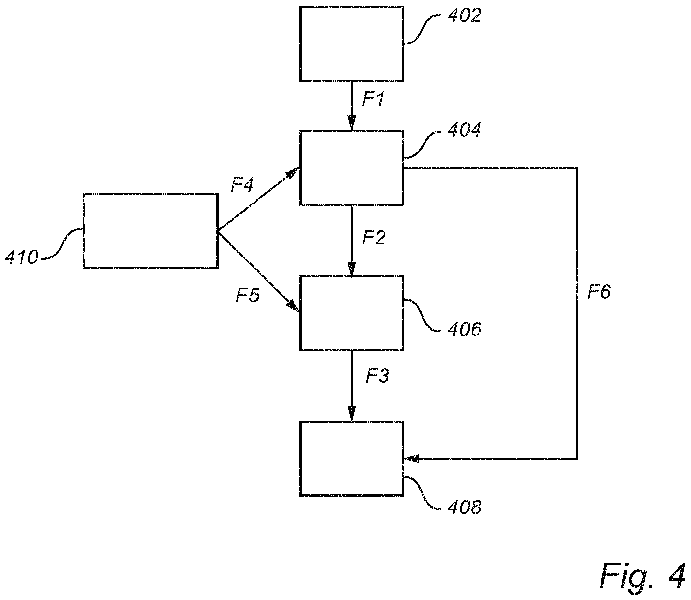

Fig. 4 schematically illustrates a possible deployment of a web-based HMI on top of current DCS technology. The top layer 402 is formed by a set of micro-frontends that together form a web application, where the web browser running the HMI frontend interacts with the backend 404 via HTTPS or a Secure Web Socket (WSS) protocols in a first flow F1.

The HMI backend 404 then interacts with the DCS System 406 in flow F2 using OPC UA Protocol e.g., the OPC UA backbone 139 in fig. 3. The DCS system provides an interface to controllers in flow F3. Typically, the communication of the DCS with Control hardware involves proprietary protocols or OPC Classic protocol, or some other communication. It is also possible that the HMI backend 404 interacts directly with Control hardware 408 if they support OPC UA protocol according to flow F6. Such scenario assumes that Control devices 408 would be directly connected to the OPC UA communication backbone 139 or via an FCI 133.

An Engineering platform 410 is used to configure the DCS system 406 as well as the HMI backend 404 in flow F4 and F5 respectively. Configuration is deployed from the Engineering platform 410 to the HMI backend using the OPC UA protocol 139. The same Engineering platform 410 is used to deploy the DCS system 406. Alternatively, the Engineering platform 410 can contain two separate modules that are synchronized, where each of the modules is responsible for the configuration of the HMI backend 404 and DCS system 406, respectively.

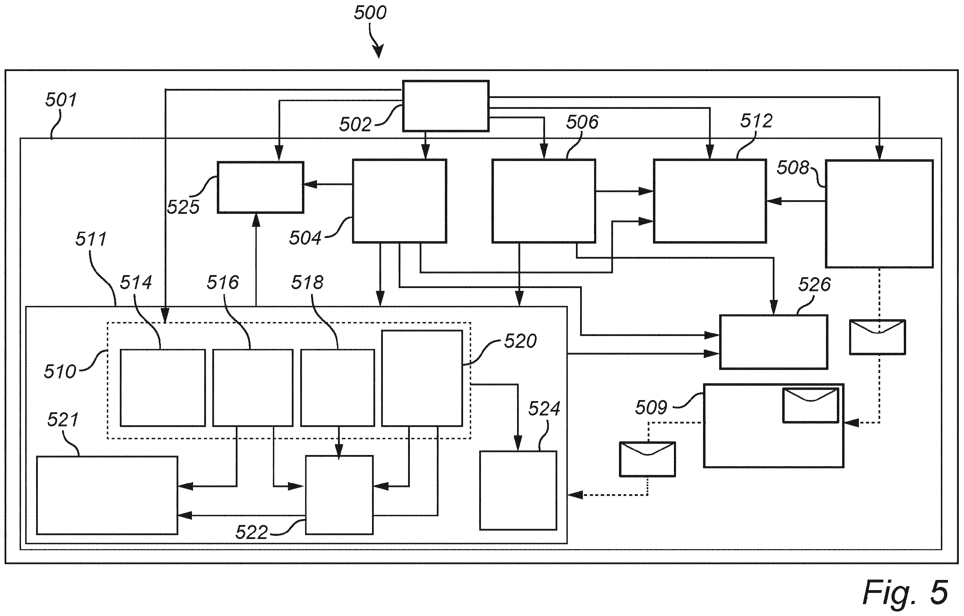

Fig. 5 provides a concrete example of a high level architecture 500 that was showed in Figure 4. Any of the services depicted in that figure can be deployed in multiple instances to get a highly available system configuration (this would be typically achieved by using an orchestrator). The HMI Frontend runs in HTML5 browser 502 as a client application where it is used by a user. The Engineering Platform (Engineering) 504 also exposes a web User Interface (based on Common HMI framework), similarly to "System Management" 506 and "Certificate Management" 508. Such architecture allows a user to switch seamlessly between runtime activities, i.e., interaction with HMI backend 510, and Engineering 504 activities that are pre-dominant during system commissioning or expansions and upgrades.

The "System Management" 506 provides an overview of nodes, services, users and roles, etc. deployed in the system. An engineer can manage system nodes, (e.g., add, remove, backup, restore), see their status, collect diagnostic information, or in case of failures collect crash dumps. The "Authentication Service" 512 implements the OpenID Connect authentication protocol and it is used by all services as well as the front-end applications to authenticate users and obtain security tokens.

The "certificate management" service 508 provides an automatic mechanism to distribute certificates in the system to establish secure communication. The solution primarily takes care of HTTPS certificates used by web servers and TLS certificates used by OPC UA Clients and Servers. The "HMI Backend" layer 510 is identical to the one depicted in Figure 4. In this specific case it comprises four services: Workplace 514, Alarm 516, Trend 518 and Process graphics service 520. All services interact in this specific case (flow F6 in Figure 4) directly with the control layer 521 that consist of controllers of Field Connectivity Services (FCI). Similarly, the HMI services could interact with a DCS system as indicated in flow F2 in Figure 4.

Figure 5 also illustrates a History Service 522 that is used for an archival of long and/or short-term event and process data obtained from the control layer or a DCS system.

The flows in Figure 5 are just for illustration and a trend component can establish a direct data subscription to a controller for example to display a trim curve. All services in the HMI backend layer 510 make use of a Runtime Directory service 524 that holds the object directory, can serve for service discovery. In some cases, the HMI services can also contain own replica of the object directory.

There is further a licensing service 525.

The Authorization Service 526 is a shared service is used to provide access tokens to clients so that they can access resources and helps implementing role-based user management. The Authorization service 526 can be commonly implemented as part of an OPC UA Global Discovery Service (GDS).

All HMI backend services also interact with a licensing service that typically implements specific license enforcement functionality. This might involve the limiting of the number of actively connected clients or restricting access to specific features of an operator workplace based on parameters specified in a license file.

There is further provided a computer program product comprising a computer readable medium having stored thereon computer program means to implement the distributed human-machine interface system 100.

The computer program product may be run by a set of distributed control units 118a-c.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A distributed human-machine interface system (100) for a distributed control system or integrated operations management, comprising:
a set of view modules (102) being separately isolated micro-frontend applications (104) each implemented by a web component (106),
each micro-frontend application comprising a backend application (108) contained in a respective separate container (110), the backend applications communicate with their view modules using a web-based protocol,
a common HMI framework (112) for all of the view modules, the common HMI framework includes at least infrastructure functionalities and user experience design.

2. The distributed human-machine interface system according to claim 1, wherein the common HMI framework is configured to provide orchestrated control of all the view modules at a workplace.

3. The distributed human-machine interface system according to any one of claims 1 and 2, the backend applications communicate with their view module using HTTPS REST API or Web Sockets.

4. The distributed human-machine interface system according to any one of the preceding claims, wherein the web component is HTML5.

5. The distributed human-machine interface system according to any one of the preceding claims, wherein the common HMI framework is configured to exchange messages (M) and states (S) across different micro-frontends.

6. The distributed human-machine interface system according to any one of the preceding claims, comprising at least one control unit (118a-c) configured to run at least one micro-frontend each.

7. The distributed human-machine interface system according to any one of the preceding claims, wherein the micro-frontend applications include at least a process graphics module (102a), and a workplace module, wherein the process graphics module is configured to provide data indicative of features of an object a user interacts with, and the workplace module is configured to find micro-frontend applications related to the object.

8. The distributed human-machine interface system according to any one of the preceding claims, wherein the micro-frontend applications provide at least two types of applications.

9. The distributed human-machine interface system according to claim 8, comprising a viewer application (149) configured to collect visual content from the micro-frontend applications, and from at least one external application, and provide the visual contents to a computer display.

10. The distributed human-machine interface system according to any one of the preceding claims, wherein the docker containers are geographically distributed on separate control units of a distributed control system.

11. The distributed human-machine interface system according to any one of the preceding claims, wherein the HMI framework is configured to provide a token-based authentication for user login.

12. The distributed human-machine interface system according to any one of the preceding claims, wherein the micro-frontend applications include at least one of process graphics modules, alarm modules and trend view modules.

13. A set of control units configured to implement the distributed human-machine interface system according to any one of the preceding claims.

14. A system comprising a computer display and the set of control units according to claim 13.

15. A computer program product comprising a computer readable medium having stored thereon computer program means for implement the distributed human-machine interface system according to any one of the preceding claims.
